(19) **Europäisches Patentamt**
**European Patent Office**
**Office européen des brevets**

(11) **EP 2 316 601 B1**

(12) **EUROPEAN PATENT SPECIFICATION**

(45) Date of publication and mention
of the grant of the patent:
**13.02.2013 Bulletin 2013/07**

(51) Int Cl.:
***B23D 45/10*** *(2006.01)* ***B23D 59/00*** *(2006.01)*

(21) Application number: **10014195.1**

(22) Date of filing: **02.11.2010**

(54) **Method and apparatus for saw blades alignment**

Verfahren und Vorrichtung zum Ausrichten von Sägeblättern

Procédé et dispositif pour aligner des lames de scie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.11.2009 IT BO20090717**

(43) Date of publication of application:
**04.05.2011 Bulletin 2011/18**

(73) Proprietor: **Naldi, Valter**
**40137 Bologna (IT)**

(72) Inventor: **Naldi, Valter**
**40137 Bologna (IT)**

(56) References cited:
**EP-A1- 1 815 931      DE-A1- 19 520 108
DE-U1- 20 005 348**

Printed by Jouve, 75001 PARIS (FR)

## Description

The present invention relates to an operating method relative to a cutting unit of a panel cutting machine.

In particular, the present invention relates to a method for the correct alignment between a cutting blade and its relevant scoring blade, both to be used in a panel cutting machine.

Therefore, the method object of the present invention aims at the alignment of a set of blades (cutting and scoring blades) to be used on a cutting machine, avoiding typical problems of existing systems using a measuring system for both blades and a sample alignment of a known set of blades as a basis for comparison for the following adjustments.

In the field of wood based panels, or similar, it is known to use cutting machines having a main frame, a stack of panels positioning device towards a cutting station, and a cutting unit, mounted on a saw carriage, able to execute a cut across the stack of panels.

Typically, the cutting unit uses a circular cutting blade that protrudes from a longitudinal slot on a horizontal table fixed to a main machine frame onto which a panel or a stack of panels to be cut according to a vertical plane are disposed. On certain cutting machines, during cutting, the stack of panels is clamped by pressing means against the machine table.

Cutting unit includes a circular cutting blade able to cut the entire panel or stack of panels height, and a scoring blade, also of circular shape, but with a much smaller diameter than the one of the cutting blade. Scoring blade, during feeding of saw carriage towards stack of panels on certain machines, or feeding of panels towards a fixed saw blade unit on other cutting machines, precedes cutting blade in order to score the bottom surface of the stack of panels.

The execution of a score on the bottom surface of the stack, is mainly necessary for special surface covering chipboard panels in order to allow the cutting blade to exit from the bottom panel surface directly in contact with the machine table without chipping on both cutting edges.

The need to have optimal cuts on every panel surfaces, has caused most cutting machines to use the mentioned scoring blades in order to execute said scores, avoiding therefore chipping on both side of cut on bottom panel surface directly in contact with machine table. The scoring blade rotates in opposite direction to main cutting blade and generally penetrates a couple of millimetres into bottom panel.

However, a problem on similar cutting units, is constituted by the alignment of the cutting blade with the scoring one. In fact, in order to obtain the desired effect, the cut produced by the cutting blade must be inside the score produced by the scoring blade on bottom surface of panels or stack of panels, and moreover that same cut must be perfectly centered in respect to the score. Moreover for a good and unanimously recognized cutting quality, the scoring blade score width should be only a very little bit larger than the thickness of the cutting blade so that the difference between the score and the cutting blade widths could nearly not be detected.

Normally the alignment between the cutting and the scoring blades is carried out manually by the operator by executing some test cuts. It is therefore very time consuming if this operation has to be executed every time a set of blades has to be changed.

A couple of attempts to solve this problem have been described in German patent DE-B4-19520108 (SCHELLING) and in European patent EP-B1-1 066 906 (BIESSE).

In DE-B4-19520108 (SCHELLING) a machine which include an apparatus for measuring the dimensional characteristics of saw blades by means of a laser or led sensing system is disclosed. The method adopted for the alignment between the cutting blade and its relevant scoring blade mounted on the machine, foresees the measurement, on the machine itself, of the cutting blade tooth thickness, and of the scoring blade tooth three dimensional characteristics, that is, the bottom base, the top base and the height of the same tooth; all these measurements, both of the cutting blade and of the scoring blade, are referred to a common reference plane parallel to the same blades. After having measured all above measurements, the system calculates the aligning position taking into consideration all measured data. The system is therefore extremely slow because of the complex measurement of the trapezoidal shaped scoring blade tooth and it delays therefore the start up in production of the machine every time a saw blade change is needed.

On the other side the solution described in EP-B1-1 066 906 (BIESSE) has the inconvenience of requiring a scoring blade that has a long lasting sharpness since the same has to be used with several cutting blades (that wear out every two or three hours depending on their use). In this case the only scoring blades that can be used are diamond ones, that, however, are extremely expensive. Impurity, sometimes little stones or steel fragments present in chipboard panels, discourage the use of diamond scoring blades since the above mentioned impurity could irreparably damage the same. Therefore, generally, the use of tungsten carbide tooth normal scoring blades is preferred, which are inexpensive, although they last similarly to cutting blades made with same material. But this means the simultaneous changing of both blades and therefore their relative manual adjustment making null the system object of the patent.

In DE20005348U1 (PANHANS) an anti-collision system to be used on cutting machines that use either a cutting blade and a scoring blade is disclosed.

This system has to be used when, for working necessities, it is mounted on machine a cutting blade with a diameter bigger than the one foreseen in the saw carriage dimensioning.

In fact, when cutting blade has a diameter within the specified dimension, there is enough space allocated for the scoring blade and therefore the same scoring blade can be used to score the underside of the panels to be cut to avoid chipping with the cutting blade.

To this extent, in fact, it is foreseen a manual or motorized adjustment of scoring unit to align it to cutting blade.

According to the invention, scoring unit has the possibility to be moved sideways in a parking position away from its working position that is just in front and in line of cutting blade.

In case a cutting blade larger than the one normally foreseen for the saw carriage is mounted on machine, sensors detect its diameter and accordingly avoid that the scoring unit is moved in working position where it could collide with cutting blade.

The preambles of claims 1 and 12 are based on this document.

EP1815931A1 (MARTIN) refers to an aligning method between a cutting and a scoring blade of a cutting machine where certain cutting blade data or parameters inherent to define its alignment with a specific scoring blade are previously determined and memorized in the control unit of the cutting machine.

When a cutting blade is mounted on the machine, it is at first recognized by a relevant identification system that recall from cutting machine control memory its data or parameters in order to carry out its lateral and vertical alignment with a specific scoring blade.

In similar manner, data or parameters relative to the various scoring blades could be determined and memorized so that they could be recalled when needed.

This method foresees therefore, the preventive knowledge and/or determination of certain characteristic data (the one/ones memorized) that in conjunction with the extra parameters eventually added when the cutting blade is mounted on machine determine the lateral and/or vertical alignment of a relevant scoring blade.

The automation in regards to the alignment between a cutting blade and its relevant scoring blade, consists therefore in recalling data and/or situations previously determined and memorized.

It is obvious that in presence of a new cutting blade or of a new scoring blade never previously used or memorized in the control unit, this system cannot execute an automatic alignment.

The same problem exists when cutting blades and/or scoring blades are sharpened since this operation changes their characteristic data previously memorized.

The main object of the present invention is therefore that of providing a method for the correct alignment between a cutting blade and its relevant scoring blade that is free from above inconveniences.

The present invention will be now described with reference to the enclosed drawings that show a non limiting actuating example in which:

- figure 1 shows schematically a cutting unit of a cuting machine relative to a machine work table; and
- figure 2 shows schematically a lateral view of cutting unit of figure 1.

Number 10 in enclosed figures, indicates as a whole a cutting unit of a cutting machine 1 (not shown as a whole)

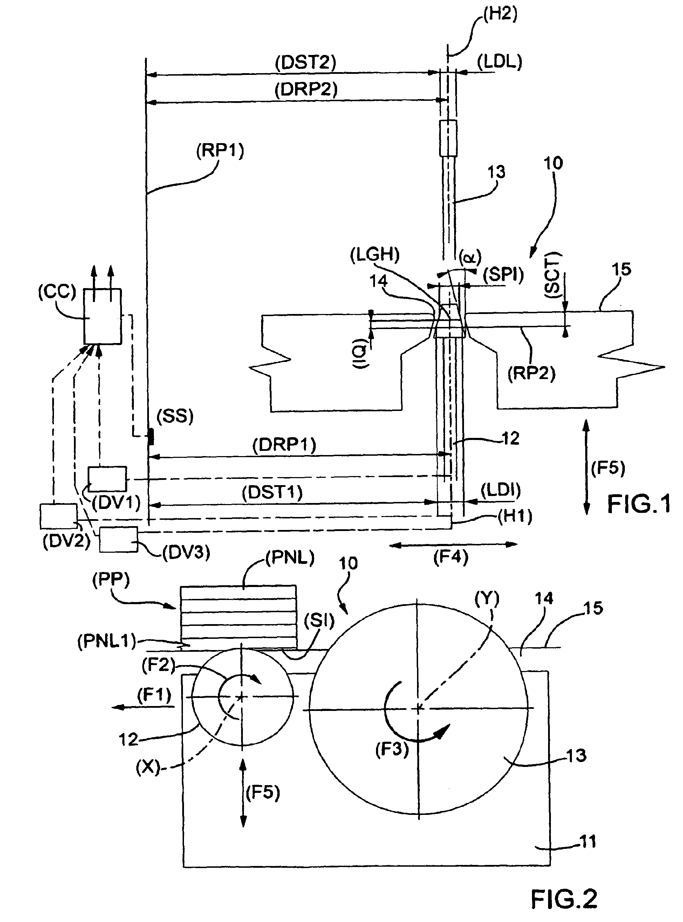

Cutting unit 10, in turn, comprises a saw carriage 11 (figure 2), that during cutting is moved according to an arrow (F1), but in certain machines is fixed and it is the panel that is moved opposite to arrow (F1), onto which is mounted a scoring blade 12 (that, in use, rotates around an axis (X) according to an arrow (F2)), followed by a cutting blade (in use rotating around an axis (Y) according to an arrow (F3)). As known scoring blade 12 and cutting blade 13 generally rotate in opposite direction.

Scoring blade 12 and cutting blade 13 both protrude from a gap 14 made on a work table 15 of cutting machine 1. Work table 15 supports a stack (PP) of panels (PNL) eventually positioned on work table 15 by a pushing unit (not shown).

As known, the object of scoring blade 12 is that of making a score on bottom surface of bottom panel (PNL1), a score (SI) that must be perfectly aligned to cutting blade 13 during effective cutting of stack (PP).

Rotation of scoring blade 12 and of cutting blade 13 are carried out by means of known devices and not shown.

Moreover cutting unit 10 comprises the following devices:

(1) an electronic control (CC) electronically connected to a sensing measuring device (SS) (mechanical, laser, led, etc.) placed, for example, in a way to measure a distance (DST1) of scoring blade 12 (see later) and a distance (DST2) of cutting blade 13 in respect to a first reference plane (RP1), over and above, obviously, measuring respective tooth thicknesses (LDI, LDL) of both blades 12 and 13;

(2) a first driving device (DV1) able to carry out lateral movements of scoring blade 12 in accordance with double pointed arrow (F4);

(3) a second driving device (DV2) able to carry out vertical movements of scoring blade 12 in accordance with double pointed arrow (F5); and

(4) a third driving device (DV3) able to adjust the thickness of special straight tooth mechanically connected double blade scoring units.

As usual, only scoring blade 12 could be laterally (arrow (F4)) or vertically (arrow (F5)) moved, while cutting blade is fixed in respect to saw carriage 11.

In figure 1 also a scoring blade 12 tooth axis (H1), and a cutting blade 13 tooth axis (H2) are displayed.

To explain the operating method object of present invention, it is necessary to introduce the concepts of "first reference plane (RP1)" and "second reference plane (RP2)".

As "first reference plane (RP1)" is defined any fixed plane parallel to saw blades axes (H1) and (H2). In present context, for simplicity, we will always refer to a unique reference plane (RP1) both for the cutting blade 13 and for the scoring blade 12. However the used method could work also with two different reference planes, one (RP1) for the scoring blade 12 and another one parallel to (RP1) for the cutting blade 13.

As "second reference plane (RP2)" is defined any horizontal and fixed plane that crosses transversally scoring blade 12 tooth, and that is perpendicular to first reference plane (RP1).

Operating , method according to present invention is based on the measurement, of the thickness (LDI) of a scoring blade 12 tooth in correspondence to second reference fixed plane (RP2), and of the distance (DST1) of same tooth, also in correspondence to second fixed reference plane (RP2) in respect to first reference plane (RP1).

Also the thickness (LDL) of a cutting blade 13 tooth and its distance (DST2) also in respect to first reference plane (RP1), should be measured.

Saw blades 12 and 13 will be then manually aligned on machine and their aligning position is then taken as zero setting or reference position for the following alignments.

New aligning positions will be then calculated by a direct comparison between effected measurements (LDI) and (DST1) of the various scoring blades 12 and between effected measurements (LDL) and (DST2) of the various cutting blades 13.

To this end, it is important to point out that when reference is made to the reading or to the measurement of scoring or cutting blade, each one either new or sharpened, tooth, the possible reading or measurement of the thickness of the single tooth, the average of the measurements carried out on few teeth or on all teeth, the statistical average or any other method that time to time could be used as a function of the tools being used, and eventually, with measurements taken with tools in rotation are intended. The same situation applies to the reading or the measurement of the distance of same teeth in respect to respective reference planes.

In a first embodiment of the present invention scoring blades 12 with isosceles trapezoidal with similar geometric shape tooth are being used (same base angles even if with different base and height).

In this manner, as we will see, it is possible to calculate the proper aligning position on machine of a new set of blades whose data have been measured as per previous paragraphs.

In present method, at first, a sample scoring blade 12* and a sample cutting blade 13* are being mounted on saw carriage 11.

A first manual adjustment is carried out on cutting machine 1 to obtain the optimal alignment between sample cutting blade 13* and relative sample scoring blade 12* using both devices (DV1), (DV2), by making several cutting tests until satisfactory alignment is achieved (that is that cutting blade 13 should absolutely not chip out the bottom surface of first panel (PNL1)). This aligning position of sample blades 12*, 13* is taken as zero setting or reference position for the following alignments.

At this point measurements of distance (DST1*) of sample scoring blade 12* and its thickness (LDI*) and also distance (DST2*) of sample cutting blade 13* and its tooth thickness (LDL*) are carried out.

Considering the fact that a good alignment between the sample cutting blade 13* and its relevant sample scoring blade 12* requires a score width of 0,2 mm (0,1 mm each side) larger than sample cutting blade 13* thickness (LDL*), one can easily calculate (knowing scoring blade 12* base angle (a)) the distance (SCT*) of measuring point on second reference plane (RP2) in respect to working table 15.

Therefore distance (SCT*) determines the difference in height (negative or positive) between our measurement position (in correspondence to second fixed reference plane (RP2)) and the real scoring position (in correspondence to work table 15) and will be the base reference for the following adjustments.

It is obvious that if the sensing and measuring device is placed directly on machine, it could be theoretically possible to make both the reading plane (RP2) and the scoring plane coincide in correspondence to work table 15. In this last case, obviously, the distance between these two planes will be equal to zero.

We can proceed to verify the correct lateral position between sample scoring blade 12* and sample cutting blade 13*. To this purpose using the measurements executed with sensing and measuring device (SS) and its relevant electronic control (CC), we calculate the positions of the tooth axis (H1*) of sample scoring blade 12* and of tooth axis (H2*) of sample cutting blade in respect to reference plane (RP1). If previous manual alignment has been carried out correctly, the two axes (H1*) and (H2*) will be at same distance from reference plane (RP1).

If the sensing and measuring device is not directly positioned on machine but is, as we will see later, external to same machine, the measurement readings of sample blades will be done before their alignment on machine. In this case, in reference to the distance (SCT*) calculation of the reference plane (RP2) in respect to the scoring plane, what was said before is still valid; in regards to the lateral alignment base reference position according to double pointed arrow (F4), negative or positive (towards left or right in respect to Fig.1), it will be effectively the measured distance between axes (H 1) and (H2) of respective blades 12* and 13*.

Now, to align a first new set of blades 12**, 13** it is necessary to measure again the same teeth dimensions and distances of first new blades 12**, 13**, to calculate new aligning positions and then effect a correction to first new scoring blade 12** position bearing in consideration the different teeth thicknesses of first new blades 12**, 13** and respective axes' positions in relation to same values of previous set of sample blades 12*, 13*.

In fact, knowing that if the sample blades 12*, 13* were in alignment at the known or zero setting positions, and knowing now the teeth thickness and their position differences of first new set of blades 12**, 13** in respect to sample blades 12*, 13*, we will then modify the sample blades 12*, 13* aligning position of a value that is equal to the differences between the new set of blades 12**, 13** and the sample set of blades 12*, 13*, reproducing therefore the same alignment condition of sample set of blades 12*, 13*.

In this way only relative adjustments in respect to previous alignments will be made and, extremely important, the references and the movement instructions could be made available also for machines that do not have the sensing and measuring device directly installed on them since the same method, as previously said, is applicable to saw blades aligned on machine, but measured on an external bench with a sensing and measuring device on it. In addition, with this last solution, over and above transmitting electronically to the machine new aligning positions, it is possible to transmit the same visually or on paper, making this system available to existing machines that do not have a proper software for this adjustment; it is therefore possible to utilize a practical and effective aligning method by informing machine operator on manual adjustments to be effected for precise lateral and vertical alignment without carrying out any more cutting tests over and above, obviously, the initial sample saw blades adjustment.

### We now proceed to analyze a practical example:

{A} At first the measurement of a sample set of blades is carried out including a sample scoring blade 12* and a sample cutting blade 13*, being each one indifferently new or sharpened; we obtain, for example the following values:

$$(DST1^*) = 13,90 \text{ mm}$$

$$(LDI^*) = 5,60 \text{ mm}$$

$$(DST2^*) = 14,55 \text{ mm}$$

$$(LDL^*) = 4,80 \text{ mm}$$

Tooth axis (H1*) of sample scoring blade 12* is at a distance from first reference plane (RP1):

$$(DRP1^*) = 13,90 + (5,6)/2 = 16,70 \text{ mm}$$

While tooth axis (H2*) of sample cutting blade 13* is at a distance from first reference plane (RP1):

$$(DRP2^*) = 14,55 + (4,8)/2 = 16,95 \text{ mm}$$

We now manually align on machine, by means of cutting tests, sample cutting blade 13* with relevant sample scoring blade 12* just measured and take this aligning position as base and zero position for following adjustments.

Supposing we have aligned the sample scoring blade 12* executing a score (SI) with width (SPI*) of 5,0 mm (0,1 mm each side over the thickness (LDL*) of sample cutting blade) we verify by calculation the distance (STC*) between the measurement position in correspondence of second reference plane (RP2) and the scoring position on first panel (PNL1) in correspondence to work table 15.

For a scoring blade 12* with isosceles trapezoidal tooth, if we know scoring tooth angle ($\alpha$) (for example, ($\alpha$) = 8°), we can calculate the value of (STC*):

$$(SCT*) = ((5,6 - 5,0) / 2) * (cotg\ 8°) = (0,6 / 2)* (cotg\ 8°) = (0,3) * (7,11537) = 2,13\ mm$$

Since, in this case, the value of (STC*) is a positive value, we know that the scoring position of sample scoring blade 12* (in correspondence to work table 15) is higher in respect to the tooth measurement position of same sample scoring blade 12* in correspondence to second reference plane (RP2). On the other hand, since measurement is larger than score width and since the tooth has an isosceles trapezoidal shape, the measurement position must be in a lower position in respect to the scoring one.

{B} We execute now a reading measurement of typical distances of a first new set of blades which includes a first new scoring blade 12** and a first new cutting blade 13**, also in this case being each one indifferently new or sharpened, to be mounted on cutting machine 1, and we read, for example, the following values:

$$(DST1**) = 14,2\ mm$$

$$(LDI**) = 5,4\ mm$$

$$(DST2**) = 14,50\ mm$$

$$(LDL**) = 4,86\ mm$$

Tooth axis (H1**) of first new scoring blade 12** will be at a distance from first reference plane (RP1):

$$(DRP1**) = 14,20 + (5,4)/2 = 16,90\ mm$$

While tooth axis (H2**) of first new cutting blade 13** is at a distance from first reference plane (RP1):

$$(DRP2**) = 14,50 + (4,86)/2 = 16,93\ mm$$

In accordance with these values, we now take into consideration the difference between the distance of tooth axis (H1*) of sample scoring blade 12* (that is: (DRP1*) = 16,70 mm) and the distance of tooth axis (H1**) of first new scoring blade 12** to be mounted on machine (that is: (DRP1** = 16,90 mm), therefore ((DRP1*) - (DRP1**) = 16,70 mm - 16,90 mm = - 0,2 mm), that is equal to a movement of minus 0,2 mm, which means towards left in drawing of figure 1 in accord with double pointed arrow (F4), to align first new scoring blade 12** in respect to the sample one 12* when mounted on machine.

We also have to consider the difference between tooth axis (H2*) of sample cutting blade 13* mounted on machine (that is: (DRP2*) = 16,95 mm) and tooth axis (H2**) of first new cutting blade 13** (that is: (DRP2**) = 16,93 mm), therefore ((DRP2*)- (DRP2**) = 16,95 mm - 16,93 mm = + 0,02 mm).

Since, as we said, cutting blade 13 is fixed while only scoring blade 12 can be moved, we will have to change sign (positive to negative or vice versa) to the calculated movement and therefore first new scoring blade 12** has to be moved further by (- 0,02 mm) (that is always left hand in the drawing of figure 2 in accord with arrow (F4)) in order to be in alignment with first new cutting blade 13**.

By adding both movements (that is the one of the first new scoring blade 12** plus the one of the first new cutting blade 13**) we have a total lateral movement of (SL**) = -0,2 mm -0,02 mm = -0,22 mm (that is left hand in the drawing) to align laterally on machine first new scoring blade 12** with first new cutting blade 13**.

Above considerations are based on the fact that the sample set of blades 12*, 13*, has been previously aligned and therefore the same conditions of the same alignment have to be reproduced by making relative corrections between sample scoring blade 12* and first new scoring blade 12**, and between sample cutting blade 13** and first new cutting blade 13**.

For simplicity we have used a reference plane (RP1) common to both the scoring blades 12*, 13** and the cutting blades 13*, 13**. However, since in this non limiting example we execute comparisons between the single scoring blades and between single cutting blades, the reference planes could be two and different from each other, one for the scoring blades 12 and one for the cutting blades 13.

{C} As far as vertical movement (SCT**) according to double pointed arrow direction (F5) is concerned, it will be the result of following calculation:

Score width of first new scoring blade:

$$(SPI^{**}) = (LDL^{**}) + 0,2 \text{ mm} = 4,86 \text{ mm} + 0,2 \text{ mm} = 5,06 \text{ mm}$$

To this extent it is important to note that the additional dimension of 0,2 mm is hypothetic and in any case irrelevant for future adjustments (as long as the same value is always considered for all calculations) since the method used is a comparative one with relative movements and therefore the real difference between the score width and the cutting blade is going always to be the real one of the manual adjustment made by the operator. In this way if the first adjustment has been made scrupulously, also future adjustments instructed by the system will have same quality.

We calculate now the scoring position of first new scoring blade 12**:

$$(SCT^{**}) = (LDI^{**}) - (SPI^{**}) = ((5,40 - 5,06) / 2) * (\cot g \; 8°) = (0,34$$

$$/2) * (\cot g \; 8°) = (0,17) * (7,11537) = 1,21 \text{ mm}$$

Vertical movement (SV**) to align first new scoring blade 12** to first new cutting blade 13** will be equal to (SV**) = (SCT*) - (SCT**) = 2,13 mm - 1,21 mm = + 0,92 mm.

The positive factor of this value means a first new scoring blade 12** upward movement according with double pointed arrow (F5), while a negative factor would mean a downward movement.

The above calculation and vertical adjustment could be completely omitted in case of straight tooth scoring blades since the height variation of the same scoring blades would not produce any difference in the score width. It is obvious that in this case the scoring blade tooth thickness must be matched with the one of the cutting blade.

In case of straight tooth mechanically coupled double scoring blade (or split scoring blade) with manual or servo adjustment of its width, one proceeds as follows:

Reading measurements of scoring blade and relative cutting blade teeth and of their distances from reference plane (RP1) are carried out as previously described. Then the score width (SPI) can be calculated as a function of thickness (LDL) being measured. This information will be used to instruct the positioning to measure of the scoring blade thickness to be carried out externally or directly on machine, manually or through driving device (DV3).

If measured values for scoring and cutting blades are as per previous readings, for example:

$$(DST1^{**}) = 14,2 \text{ mm}$$

$$(LDI^{**}) = 5,4 \text{ mm}$$

$$(DST2^{**}) = 14,50 \text{ mm}$$

$$(LDL^{**}) = 4,86 \text{ mm}$$

we calculate the scoring width $(SPI^{**}) = (LDL^{**}) + 0,2 \text{ mm} = 4,86 + 0,2 = 5,06 \text{ mm}$.

With this value we can therefore instruct the positioning of the scoring width, by effecting, for example, a closing incremental movement of the external blade of: $5,4 - 5,06 = 0,34 \text{ mm}$.

In regards to the scoring blade reference axis $(DRP1^{**})$ to be used in lateral adjustment calculation, in this case it will be:

$$(DRP1^{**}) = (LDI^{**})\ 14,20 + (SPI^{**})\ (5,06)/2 = 16,73 \text{ mm}$$

This calculation is based on the fact that the scoring blade closer to reference axis (RP1) is fixed while the external one is movable by means of manual or servo controlled adjustment.

For the calculation of the horizontal adjustment to be made on machine to align scoring and cutting blades just measured, calculations as previously made are valid.

In this case too, as in the previous single straight tooth scoring blade solution, the vertical adjustment do not influence the scoring width and therefore is not necessary. In certain cases it would be beneficial to measure the scoring blade diameter too with the sensing and measuring device in order to adjust also the score depth depending on various needs.

As can be seen from these arguments and calculations, it is possible to proceed exactly in the same manner with a second new set of blades 12***, 13*** executing by comparison subsequent movements always referring to the previous first new set of blades or to the sample set of blades 12*, 13*.

In fact it could be effectively possible to refer always to the alignment of sample set of blades 12*, 13*, but only in case the generic scoring blade 12 adjustment is equipped with absolute positioning with positioning memory.

Moreover, following the same adopted principle, it could be possible to replace exclusively scoring blade 12**** or cutting blade 13**** taking as calculation reference, over and above replacing tool data, the missing tool already fitted on machine and previously measured. All this because there could be the need to replace the scoring blade or the cutting blade only due to early wear or bad quality.

According to a further embodiment of present invention, it is possible to execute a further measurement of the trapezoidal scoring blade thickness (LGH) at a fixed incremental dimension (IQ) (for example 1,0 mm) in order to determine the tooth lateral angle too. Having to deal with an isosceles trapezoidal geometric shape, we have therefore all data for the calculation of base angles. According to this last solution, it would not be necessary to use scoring blades with a similar geometry of tooth shape, because the tooth geometry will be determined by the double measurement, unless the different base angle is known, in which case it can be used directly in the calculations.

It is obvious that this double measurement could even determine the scoring tooth type and in particular if the scoring blade has a trapezoidal or straight shape.

From what has been explained, it is therefore obvious that following the present method, using in sequence different types of scoring blades on same cutting machine 1 could also be possible. Therefore scoring blades 12, 12*, 12**, 12*** being used in sequence on different sets of blades to be mounted on same cutting machine 1 could be indifferently scoring saws with isosceles trapezoidal type tooth, scoring saws with straight type tooth or scoring saws with double blade straight type tooth.

In fact the electronic control (CC) knowing or detecting different scoring tooth types, could take it into account in determining relative aligning positions.

Moreover, as seen, it is not absolutely necessary to have the sensing and measuring device (SS) with the relative electronic control (CC) directly on machine since this same method object of the present invention could work even if implemented in an external apparatus (that is physically separated from cutting machine) to support blade adjustment.

Therefore, present method is applicable to any cutting machine even if not predisposed for this function. In this last case information on movements (SL) and (SV) and eventually (SPI) to align a new set of blades could be given to operator in order to execute a scoring motorized movement, if available, or a scoring manual movement by means of normal mechanical adjusting screws.

For example, if a total lateral movement of +0,25 mm has to be carried out and the screw pitch is 1 mm, a quarter of a turn would be sufficient to obtain the relative positioning; the clockwise or anti clockwise direction depends on mechanical construction and on the positive or negative value of the movement.

In a further embodiment of the present invention, the above external apparatus with the sensing and measuring device (SS) and the relative electronic control (CC) is connected via electronic means with the cutting machine (1) numeric control that could therefore execute the saw blades alignment instructions in accord with the received data, without any manual machine operator intervention.

In another embodiment, while the electronic control (CC) is integrated with the cutting machine (1) numeric control, the sensing and measuring device (SS) is external to the cutting machine itself. The sensing and measuring device (SS) measured data could therefore be manually inputted in the cutting machine(1) numeric control, or transferred to the same numeric control via electronic means.

The main advantage in having an external apparatus to the cutting machine, such as the one previously described, is constituted by the fact that it is independent from the machine and therefore does not interfere with machine working time, that it is not influenced by the dusty environment typical of cutting machines and also be able to serve for the alignment of two or more cutting machines.

**Claims**

1. Method for operating the correct saw blades (12, 13) alignment In a cutting unit (10) of a cutting machine (1) of panels (PNL), and in particular for the correct alignment between a cutting blade (13) and its relevant scoring blade (12), method being **characterized by** comprising the following steps, even not necessarily in the order as listed:

   (s1) the step of measuring the tooth thickness (LDI*) and its distance (DST1*) of a sample scoring blade (12*) in respect to a first reference plane (RP1) parallel to saw blades axes (H1), (H2) in correspondence to a second reference plane (RP2) that crosses transversally scoring blade (12) tooth, and said second reference plane (RP2) being also perpendicular to said first reference plane (RP1), and the step of measuring the tooth thickness (LDL*) and its distance (DST2*) of a sample cutting blade (13*) in respect to a reference plane parallel to said first reference plane (RP1), where said sample cutting blade (13*) is to be matched to said sample scoring blade (12*) previously measured; said sample scoring blade (12*) and said sample cutting blade (13*) constituting a sample set of blades (12*, 13*);

   (s2) the step of manually aligning said sample set of blades (12*, 13*) on machine so that the cut being produced by said sample cutting blade (13*) is totally contained in a preceding score (SI) produced by said sample scoring blade (12*) on the bottom surface of a panel (PNL1); said manual alignment of sample set of blades (12*, 13*) to be used as zero setting or reference position for following alignment;

   (s3) the step of measuring the tooth thickness (LDI**) and its distance (DST1**) of a first new scoring blade (12**) in respect to said first reference plane (RP1) in correspondence to said second reference plane (RP2), and the step of measuring the tooth thickness (LDL**) and its distance (DST2**) of a first new cutting blade (13**) in respect to said reference plane parallel to first reference plane (RP1), where said first new cutting blade (13**) is to be matched to said first new scoring blade (12**) previously measured; said first new scoring blade (12**) and said first new cutting blade (13**) constituting a first new set of blades (12**, 13**);

   (s4) the step of calculating at least one relative movement ((SL**), (SV**)) of the aligning position of the first new set blades (12**, 13**) in respect to the aligning position of sample set of blades (12*, 13*); and

   (s5) the step of instructing and executing the positioning of first new scoring blade (12**) of first new set of blades (12**, 13**).

2. Method as claimed in claim 1, **characterized by** comprising that the used scoring blades (12, 12*, 12**) have isosceles trapezoidal shaped tooth.

3. Method as claimed in claim 1, **characterized by** comprising that the used scoring blades (12, 12*, 12**) have straight tooth.

4. Method as claimed in claim 1, **characterized by** comprising that the used scoring blades (12, 12*, 12**) have split blades and straight tooth.

**5.** Method as claimed in claim 2, **characterized by** comprising the following steps, even not necessarily in the order as listed:

(s1) measure the thickness (LDI*) and the distance (DST1*) of the tooth of trapezoidal shape with known base angles of a sample scoring blade (12*) in respect to said first reference plane (RP1) in correspondence to said second reference plane (RP2);

(s2) measure the thickness (LDL*) and the distance (DST2*) of the tooth of a sample cutting blade (13*) in respect to a reference plane parallel to said first reference plane (RP1), where said sample cutting blade (13*) is to be matched to said sample scoring blade (12*) previously measured; said sample scoring blade (12*) and said sample cutting blade (13*) constituting a sample set of blades (12*, 13*);

(s3) manually align said sample cutting blade (13*) to the respective sample scoring blade (12*) on machine so that the cut being produced by said sample cutting blade (13*) is totally contained in a preceding score produced by said sample scoring blade (12*) on the bottom surface of a panel (PNL1); said manual alignment of sample set of blades (12*, 13*) to be used as zero setting or reference position for the following alignments;

(s4) calculate the distance (STC*) between the measurement position on said second reference plane (RP2) and the scoring position on the bottom surface of the panel (PNL1) in correspondence to working table (15);

(s5) in relation to the positive or negative value of said distance (STC*) establish if the tooth scoring position of sample scoring blade (12*), in correspondence to working table (15), is higher or lower in respect to the measurement position on tooth of same sample scoring blade (12*) in correspondence to said second reference plane (RP2);

(s6) measure the thickness (LDI**) and the distance (DST1**) of tooth of a first new scoring blade (12**) in respect to said first reference plane (RP1) in correspondence to said second reference plane (RP2), said first new scoring blade (12**) having teeth with similar geometrical shape to the ones of the sample scoring blade (12*);

(s7) measure the thickness (LDL**) and the distance (DST2**) of tooth of a first new cutting blade (13**) in respect to the reference plane parallel to said first reference plane (RP1), where said first new cutting blade (13**) is to be matched to said first new scoring blade (12**) previously measured; said first new scoring blade (12**) and said first new cutting blade (13**) constituting a first new set of blades (12**, 13**);

(s8) calculate the side movement (SL**) of first new scoring blade (12**) in respect to the aligning position of sample scoring blade (12*) in order to align it laterally with first new cutting blade (13**);

(s9) calculate the score width (SPI**) of first new scoring blade (12**) to match with the first new cutting blade (13**);

(s10) calculate the vertical movement (SV**) of first new scoring blade (12**) in respect to the aligning position of the sample scoring blade (12*) in order to be matched with first new cutting blade (13**); and

(s11) instruct and execute the positioning of first new scoring blade (12**) in accordance to the calculations carried out in the previous steps (s8), (s9), (S10) manually or by means of moving devices (DV1), (DV2).

**6.** Method as claimed in claim 2 or in claim 5, **characterized by** comprising a further step:

(s12) execute a further measurement of the tooth width (LGH) of a generic isosceles trapezoidal shape scoring blade (12) at a fixed incremental distance (IQ) from the said reference plane (RP2) to determine in this way also the tooth side angle of the generic scoring blade (12).

**7.** Method as claimed in claim 3 or in claim 4, **characterized by** comprising the following steps, even not necessarily in the order as listed:

(s1) measure the thickness (LDI*) and the distance (DST1*) of a straight tooth shaped sample scoring blade (12*) in respect to said first reference plane (RP1) in correspondence to said second reference plane (RP2);

(s2) measure the thickness (LDL*) and the distance (DST2*) of the tooth of a sample cutting blade (13*) in respect to a reference plane parallel to said first reference plane (RP1), where said sample cutting blade (13*) is to be matched to said sample scoring blade (12*) previously measured; said sample scoring blade (12*) and said sample cutting blade (13*) constituting a sample set of blades (12*, 13*);

(s3) manually align said sample cutting blade (13*) to the respective sample scoring blade (12*) on machine so that the cut being produced by said sample cutting blade (13*) is totally contained in a preceding score produced by said sample scoring blade (12*) on the bottom surface of a panel (PNL1); said manual alignment of sample set of blades (12*, 13*) to be used as zero setting or reference position for the following alignments;

(s4) measure the thickness (LDI**) and the distance (DST1**) of tooth of a first new scoring blade (12**) in respect to said first reference plane (RP1) in correspondence to said second reference plane (RP2), said first new scoring blade (12**) having teeth with similar geometrical shape to the ones of the sample scoring blade (12*);

(s5) measure the thickness (LDL\*\*) and the distance (DST2\*\*) of tooth of a first new cutting blade (13\*\*) In respect to the reference plane parallel to said first reference plane (RP1), where said first new cutting blade (13\*\*) is to be matched to said first new scoring blade (12\*\*) previously measured; said first new scoring blade (12\*\*) and said first new cutting blade (13\*\*) constituting a first new set of blades (12\*\*, 13\*\*);

(s6) calculate the side movement (SL\*\*) of first new scoring blade (12\*\*) in respect to the aligning position of sample scoring blade (12\*) in order to align it laterally with first new cutting blade (13\*\*);

(s7) instruct and execute the positioning of first new scoring blade (12\*\*) in accordance to the calculations carried out in the previous step (s6), manually or by means of moving device (DV1).

8. Method as claimed in claim 4 or in claim 7, **characterized by** comprising a further step:

(s8) adjust the thickness (LDI) of a split blade and straight tooth generic scoring blade (12), manually or by means of a third moving device (DV3).

9. Method as claimed in claim 8, **characterized by** comprising that said further step (s8) to adjust the thickness (LDI) includes the following sub-steps, even not necessarily in the order as listed:

(s8A) calculate first new scoring blade (12\*\*) scoring width (SPI\*\*) in relation to the measured thickness (LDL\*\*) of first new cutting blade (13\*\*);

(s8B) instruct and execute the positioning to measure of the scoring blade thickness (LDI\*\*) of the first new scoring blade (12\*\*) to be effected externally or directly on machine, manually or by means of said moving device (DV3), using previously calculated scoring width (SPI\*\*) value; and

(s8C) use the data of adjusted first new scoring blade (12\*\*) to calculate the side adjustment movement (SL\*\*) of the first new scoring blade (12\*\*) itself in respect to the relevant first new cutting blade (13\*\*).

10. Method as claimed in any one of the preceding claims, **characterized by** comprising that a generic new set of blades (12, 13) includes a blade to be replaced and a blade already fitted on machine.

11. Method as claimed in any one of the preceding claims, **characterized by** comprising that adopting a second new scoring blade (12\*\*\*), and a second new cutting blade (13\*\*\*) it is taken as reference either the aligning position of said sample set of blades (12\*, 13\*), or the aligning position of said first new set of blades (12\*\*, 13\*\*).

12. Apparatus for the alignment of saw blades (12, 13) of a cutting unit (10) of a panel (PNL) cutting machine (1) and in particular for the correct alignment between a cutting blade (13) and its relevant scoring blade (12); apparatus comprising an electronic control unit (CC) and a sensing and measuring device (SS); apparatus being **characterized by** the fact that the electronic control unit (CC) is programmed in such a way to implement the operating aligning method as claimed in any one of the preceding claims 1-11.

13. Apparatus, as claimed in claim 12, **characterized by** comprising the fact of being totally integrated in the panel cutting machine (1).

14. Apparatus, as claimed in claim 12, **characterized by** comprising the fact of being completely external to the panel cutting machine (1).

15. Apparatus, as claimed in claim 12, **characterized by** comprising the fact that said electronic control unit (CC) is integrated in the panel cutting machine (1) numeric control, while said sensing and measuring device (SS) is external to the panel cutting machine (1) itself.

16. Apparatus, as claimed in claim 14 or in claim 15, **characterized by** comprising the fact that the electronic control unit (CC) is programmed in such a way that it is able to generate data that are transferred manually or by electronic means to said panel cutting machine (1).

17. Apparatus, as claimed in any one of claims 14-16, **characterized by** comprising the fact that the electronic control unit (CC) is programmed in such a way that it is capable to serve for the saw blade alignment of two or more panel cutting machines.

**EP 2 316 601 B1**

**Patentansprüche**

1. Verfahren zum Herstellen der richtigen Ausrichtung von Sägeblättern (12, 13) in einer Schneideinheit (10) einer Schneidemaschine (1) für Platten (PNL) und insbesondere für die richtige Ausrichtung zwischen einem Schneidblatt (13) und seinem entsprechenden Vorritzblatt (12), wobei das Verfahren **dadurch gekennzeichnet ist, dass** es folgende Schritte, nicht unbedingt in der angeführten Reihenfolge, umfasst:

   (s1) den Schritt des Messens der Zahndicke (LDI*) eines Probevorritzblattes (12*) und seines Abstands (DST1*) in Bezug auf eine erste Bezugsebene (RP1) parallel zu Sägeblattachsen (H1), (H2) auf der Höhe einer zweiten Bezugsebene (RP2), welche den Zahn des Vorritzblattes (12) in Querrichtung kreuzt, wobei die zweite Bezugsebene (RP2) auch im rechten Winkel zu der ersten Bezugsebene (RP1) verläuft, und den Schritt des Messens der Zahndicke (LDL*) eines Probeschneidblattes (13*) und seines Abstands (DST2*) in Bezug auf eine Bezugsebene parallel zu der ersten Bezugsebene (RP1), wobei das Probeschneidblatt (13*) mit dem zuvor gemessenen Probevorritzblatt (12*) abzugleichen ist; wobei das Probevorritzblatt (12*) und das Probeschneidblatt (13*) einen Probesägeblattsatz (12*, 13*) bilden;
   (s2) den Schritt des manuellen Ausrichtens des Probesägeblattsatzes (12*, 13*) an der Maschine, derart, dass der durch das Probeschneidblatt (13*) hergestellte Schnitt zur Gänze in einer vorhergehenden Ritzung (SI) enthalten ist, welche durch das Probevorritzblatt (12*) an der unteren Oberfläche der Platte (PNL1) hergestellt wurde; wobei die manuelle Ausrichtung des Probesägeblattsatzes (12*, 13*) als Nulleinstellung oder Referenzposition für nachfolgende Ausrichtungen zu verwenden ist;
   (s3) den Schritt des Messens der Zahndicke (LDI**) eines ersten neuen Vorritzblattes (12**) und seines Abstands (DST1**) in Bezug auf die erste Bezugsebene (RP1) auf der Höhe der zweiten Bezugsebene (RP2), und den Schritt des Messens der Zahndicke (LDL**) eines ersten neuen Schneidblattes (13**) und seines Abstands (DST2**) in Bezug auf die Bezugsebene parallel zu der ersten Bezugsebene (RP1), wobei das erste neue Schneidblatt (13**) mit dem zuvor gemessenen ersten neuen Vorritzblatt (12**) abzugleichen ist; wobei das erste neue Vorritzblatt (12**) und das erste neue Schneidblatt (13**) einen ersten neuen Sägeblattsatz (12**, 13**) bilden;
   (s4) den Schritt des Berechnens mindestens einer relativen Bewegung ((SL**), (SV**)) der Ausrichtposition des ersten neuen Sägeblattsatzes (12**, 13**) in Bezug auf die Ausrichtposition des Probesägeblattsatzes (12**, 13**); und
   (s5) den Schritt des Anweisens und Ausführens des Positionierens des ersten neuen Vorritzblattes (12**) des ersten neuen Sägeblattsatzes (12**, 13**).

2. Verfahren nach Anspruch 1, **dadurch gekennzeichnet, dass** die verwendeten Vorritzblätter (12, 12*, 12**) Zähne in Form von gleichschenkeligen Trapezen aufweisen.

3. Verfahren nach Anspruch 1, **dadurch gekennzeichnet, dass** die verwendeten Vorritzblätter (12, 12*, 12**) gerade Zähne aufweisen.

4. Verfahren nach Anspruch 1, **dadurch gekennzeichnet, dass** die verwendeten Vorritzblätter (12, 12*, 12**) geteilte Blätter und gerade Zähne aufweisen.

5. Verfahren nach Anspruch 2, **dadurch gekennzeichnet, dass** es folgende Schritte, nicht unbedingt In der angeführten Reihenfolge, umfasst:

   (s1) Messen der Dicke (LDI*) des trapezförmigen Zahnes mit bekannten Basiswinkeln eines Probevorritzblattes (12*) und seines Abstands (DST1*) in Bezug auf die erste Bezugsebene (RP1) auf der Höhe der zweiten Bezugsebene (RP2);
   (s2) Messen der Dicke (LDL*) des Zahnes eines Probeschneidblattes (13*) und seines Abstands (DST2*) in Bezug auf eine Bezugsebene parallel zu der ersten Bezugsebene (RP1), wobei das Probeschneidblatt (13*) mit dem zuvor gemessenen Probevorritzblatt (12*) abzugleichen ist; wobei das Probevorritzblatt (12*) und das Probeschneidblatt (13*) einen Probesägeblattsatz (12*, 13*) bilden;
   (s3) manuelles Ausrichten des Probeschneidblattes (13*) gemäß dem entsprechenden Probevorritzblatt (12*) an der Maschine, derart, dass der durch das Probeschneidblatt (13*) hergestellte Schnitt zur Gänze In einer vorhergehenden Ritzung (SI) enthalten ist, welche durch das Probevorritzblatt (12*) an der unteren Oberfläche einer Platte (PNL1) hergestellt wurde; wobei die manuelle Ausrichtung des Probesägeblattsatzes (12*, 13*) als Nulleinstellung oder Referenzposition für die nachfolgenden Ausrichtungen zu verwenden ist;
   (s4) Berechnen des Abstands (STC*) zwischen der Messposition an der zweiten Bezugsebene (RP2) und der

12

Vorrilzposition an der unteren Oberfläche der Platte (PNL1) auf der Höhe des Arbeitstisches (15);

(s5) Feststellen, in Bezug auf den positiven oder negativen Wert dieses Abstands (STC*), ob die Zahnvorritzposition des Probevorritzblattes (12*) auf der Höhe des Arbeitstisches (15) in Bezug auf die Messposition am Zahn desselben Probevorritzblattes (12*) auf der Höhe der zweiten Bezugsebene (RP2) höher oder tiefer ist;

(s6) Messen der Dicke (LDI**) eines Zahnes eines ersten neuen Vorritzblattes (12**) und seines Abstands (DST1**) in Bezug auf die erste Bezugsebene (RP1) auf der Höhe der zweiten Bezugsebene (RP2), wobei das erste neue Vorritzblatt (12**) Zähne mit einer geometrischen Form, die der von jenen des Probevorritzblattes (12*) ähnelt, aufweist;

(s7) Messen der Dicke (LDL**) eines Zahnes eines ersten neuen Schneidblattes (13**) und seines Abstands (DST2**) in Bezug auf die Bezugsebene parallel zu der ersten Bezugsebene (RP1), wobei das erste neue Schneidblatt (13**) mit dem zuvor gemessenen ersten neuen Vorritzblatt (12**) abzugleichen ist; wobei das erste neue Vorritzblatt (12**) und das erste neue Schneidblatt (13**) einen ersten neuen Sägeblattsatz (12**, 13**) bilden;

(s8) Berechnen der Seitenbewegung (SL**) des ersten neuen Vorritzblattes (12**) in Bezug auf die Ausrichtposition des Probevorritzblattes (12*), um dieses seitlich mit dem ersten neuen Schneidblatt (13**) auszurichten;

(s9) Berechnen der Vorritzbreite (SPI**) des ersten neuen Vorritzbiattes (12**), um diese mit dem ersten neuen Schneidblatt (13**) abzugleichen;

(s10) Berechnen der vertikalen Bewegung (SV**) des ersten neuen Vorritzblattes (12**) in Bezug auf die Ausrichtposition des Probevorritzblattes (12*), um dieses mit dem ersten neuen Schneidblatt (13**) abzugleichen; und

(s11) Anweisen und Ausführen des Positionierens des ersten neuen Vorritzblattes (12**) gemäß den in den vorhergehenden Schritten (s8), (s9), (s10) durchgeführten Berechnungen, manuell oder mithilfe von Bewegungsvorrichtungen (DV1), (DV2).

6. Verfahren nach Anspruch 2 oder Anspruch 5, **dadurch gekennzeichnet, dass** es einen weiteren Schritt umfasst:

(s12) Durchführen einer weiteren Messung der Breite eines Zahnes (LGH) eines generischen Vorritzblattes (12) in Form eines gleichschenkeligen Trapezes in einem festen Schrittabstand (IQ) von der Bezugsebene (RP2), um auf diese Weise auch den Zahnseitenwinkel des generischen Vorritzblattes (12) zu bestimmen.

7. Verfahren nach Anspruch 3 oder Anspruch 4, **dadurch gekennzeichnet, dass** es folgende Schritte, nicht unbedingt in der angeführten Reihenfolge, umfasst:

(s1) Messen der Dicke (LDI*) eines Probevorritzblattes (12*) mit geraden Zähnen und seines Abstands (DST1*) in Bezug auf die erste Bezugsebene (RP1) auf der Höhe der zweiten Bezugsebene (RP2);

(s2) Messen der Dicke (LDL*) des Zahnes eines Probeschneidblattes (13*) und seines Abstands (DST2*) in Bezug auf eine Bezugsebene parallel zu der ersten Bezugsebene (RP1), wobei das Probeschneidblatt (13*) mit dem zuvor gemessenen Probevorritzblatt (12*) abzugleichen ist; wobei das Probevorritzblatt (12*) und das Probeschneidblatt (13*) einen Probesägeblattsatz (12*, 13*) bilden;

(s3) manuelles Ausrichten des Probeschneidblattes (13*) gemäß dem entsprechenden Probevorritzblatt (12*) an der Maschine, derart, dass der durch das Probeschneidblatt (13*) hergestellte Schnitt zur Gänze in einer vorhergehenden Ritzung (SI) enthalten ist, welche durch das Probevorritzblatt (12*) an der unteren Oberfläche einer Platte (PNL1) hergestellt wurde; wobei die manuelle Ausrichtung des Probesägeblattsatzes (12*, 13*) als Nulleinstellung oder Referenzposition für die nachfolgenden Ausrichtungen zu verwenden ist;

(s4) Messen der Dicke (LDI**) eines Zahnes eines ersten neuen Vorritzblatts (12**) und seines Abstands (DST1**) in Bezug auf die erste Bezugsebene (RP1) auf der Höhe der zweiten Bezugsebene (RP2), wobei das erste neue Vorritzblatt (12**) Zähne mit einer geometrischen Form, die der von jenen des Probevorritzblattes (12*) ähnelt, aufweist;

(s5) Messen der Dicke (LDL**) eines Zahnes eines ersten neuen Schneidblatts (13**) und seines Abstands (DST2**) in Bezug auf die Bezugsebene parallel zu der ersten Bezugsebene (RP1), wobei das erste neue Schneidblatt (13**) mit dem zuvor gemessenen ersten neuen Vorritzblatt (12**) abzugleichen ist; wobei das erste neue Vorritzblatt (12**) und das erste neue Schneidblatt (13**) einen ersten neuen Sägeblattsatz (12**, 13**) bilden;

(s6) Berechnen der Seitenbewegung (SL**) des ersten neuen Vorritzblattes (12**) in Bezug auf die Ausrichtposition des Probevorritzblattes (12*), um dieses seitlich mit dem ersten neuen Schneidblatt (13**) auszurichten;

(s7) Anweisen und Ausführen des Positionierens des ersten neuen Vorriablattes (12**) gemäß den in dem vorhergehenden Schritt (s6) durchgeführten Berechnungen, manuell oder mithilfe der Bewegungsvorrichtung (DV1).

8. Verfahren nach Anspruch 4 oder Anspruch 7, **dadurch gekennzeichnet, dass** es einen weiteren Schritt umfasst:

(s8) Einstellen der Dicke (LDI) eines geteilten Sägeblattes und eines generischen Vorritzblattes (12) mit geraden Zähnen, manuell oder mithilfe einer dritten Bewegungsvorrichtung (DV3).

9. Verfahren nach Anspruch 8, **dadurch gekennzeichnet, dass** der weitere Schritt (s8) zum Einstellen der Dicke (LDT) folgende Teilschritte, wenn auch nicht unbedingt in der angeführten Reihenfolge, umfasst:

(s8A) Berechnen der Vorritzbreite (SPI**) des ersten neuen Vorritzblattes (12**) in Bezug auf die gemessene Dicke (LDL**) des ersten neuen Schneidblattes (13**);
(s8B) Anweisen und Ausführen der Positionierung gemäß der Messung der Vorritzblattdicke (LDI**) des ersten neuen Vorritzblattes (12**), was extern oder direkt an der Maschine manuell oder mithilfe der Bewegungsvorrichtung (DV3) durchzuführen ist, unter Verwendung des zuvor berechneten Vorritzbreitenwerts (SPI**); und
(s8C) Verwenden der Daten des eingestellten ersten neuen Vorritzblattes (12**), um die seitliche Einstellungsbewegung (SL**) des ersten neuen Vorritzblattes (12**) selbst in Bezug auf das entsprechende erste neue Schneidblatt (13**) zu berechnen.

10. Verfahren nach einem beliebigen der vorhergehenden Ansprüche, **dadurch gekennzeichnet, dass** ein generischer neuer Sägeblattsatz (12, 13) ein Ersatzblatt und ein bereits an der Maschine angebrachtes Blatt umfasst.

11. Verfahren nach einem beliebigen der vorhergehenden Ansprüche, **dadurch gekennzeichnet, dass** beim Anwenden eines zweiten neuen Vorritzblattes (12***) und eines zweiten neuen Schneidblattes (13***) entweder die Ausrichtposition des Probeblattsatzes (12*, 13*) oder die Ausrichtposition des ersten neuen Blattsatzes (12**, 13**) als Referenz verwendet wird.

12. Vorrichtung zur Ausrichtung von Sägeblättern (12, 13) einer Schneideinheit (10) einer Schneidemaschine (1) für Platten (PNL) und insbesondere für die richtige Ausrichtung zwischen einem Schneidblatt (13) und seinem entsprechenden Vorritzblatt (12); wobei die Vorrichtung eine elektronische Steuerung (CC) und eine Detektier- und Messvorrichtung (SS) umfasst; wobei die Vorrichtung **dadurch gekennzeichnet ist, dass** die elektronische Steuerung (CC) derart programmiert ist, dass das Betriebsausrichtungsverfahren nach einem beliebigen der vorhergehenden Ansprüche 1-11 implementiert wird.

13. Vorrichtung nach Anspruch 12, **dadurch gekennzeichnet, dass** sie zur Gänze in die Plattenschneidemaschine (1) integriert ist.

14. Vorrichtung nach Anspruch 12, **dadurch gekennzeichnet, dass** sie zur Gänze außerhalb der Plattenschneidemaschine (1) angeordnet ist.

15. Vorrichtung nach Anspruch 12, **dadurch gekennzeichnet, dass** die elektronische Steuerung (CC) in die numerische Steuerung der Plattenschneidemaschine (1) integriert ist, während die Detektier- und Messvorrichtung (SS) außerhalb der Plattenschneidemaschine (1) selbst angeordnet ist.

16. Vorrichtung nach Anspruch 14 oder Anspruch 15, **dadurch gekennzeichnet, dass** die elektronische Steuerung (CC) derart programmiert ist, dass sie in der Lage ist, Daten zu erzeugen, die manuell oder durch elektronische Mittel zu der Plattenschneidemaschine (1) übertragen werden.

17. Vorrichtung nach einem beliebigen der Ansprüche 14-16, **dadurch gekennzeichnet, dass** die elektronische Steuerung (CC) derart programmiert ist, dass sie In der Lage ist, für die Sägeblattausrichtung von zwei oder mehr Plattenschneidemaschinen verwendet zu werden.

## Revendications

1. Procédé pour réaliser l'alignement correct de lames de scie (12, 13) dans une unité de coupe (10) d'une machine de coupe (1) de panneaux (PNL), et en particulier pour l'alignement correct entre une lame de coupe (13) et sa lame à inciser pertinente (12), le procédé étant **caractérisé en ce qu'**il comprend les étapes suivantes, même non nécessairement dans l'ordre fourni :

(si) l'étape de mesure de l'épaisseur de dent (LDI*) et de sa distance (D5T1*) d'une lame à inciser échantillon (12*) par rapport à un premier plan de référence (RP1) parallèle à des axes de lames de scie (H1), (H2) en correspondance avec un second plan de référence (RP2) qui traverse transversalement la dent de la lame à indser (12), ledit second plan de référence (RP2) étant également perpendiculaire audit premier plan de référence (RP1), et l'étape de mesure de l'épaisseur de dent (LDL*) et de sa distance (DST2*) d'une lame de coupe échantillon (13*) par rapport à un plan de référence parallèle audit premier plan de référence (RP1), où ladite lame de coupe échantillon (13*) doit correspondre à ladite lame à inciser échantillon (12*) auparavant mesurée ; ladite lame à inciser échantillon (12*) et ladite lame de coupe échantillon (13*) constituant un jeu échantillon de lames (12*, 13*) ;

(s2) l'étape d'alignement manuel dudit jeu échantillon de lames (12*, 13*) sur la machine de sorte que la coupe produite par ladite lame de coupe échantillon (13*) soit totalement contenue dans une incision précédente (SI) produite par ladite lame à inciser échantillon (12*) sur la surface inférieure d'un panneau (PNL1) ; ledit alignement manuel du jeu échantillon de lames (12*, 13*) devant être utilisé en tant que position de remise à zéro ou de référence pour des alignements suivants ;

(s3) l'étape de mesure de l'épaisseur de dent (LDI**) et de sa distance (DST1**) d'une première nouvelle lame à inciser (12**) par rapport audit premier plan de référence (RP1) en correspondance avec ledit second plan de référence (RP2), et l'étape de mesure de l'épaisseur de dent (LDL**) et de sa distance (DST2**) d'une première nouvelle lame de coupe (13**) par rapport audit plan de référence parallèle au premier plan de référence (RP1), où ladite première nouvelle lame de coupe (13**) doit correspondre à ladite première nouvelle lame à inciser (12**) auparavant mesurée ; ladite première nouvelle lame à inciser (12**) et ladite première nouvelle lame de coupe (13**) constituant un premier nouveau jeu de lames (12**, 13**) ;

(s4) l'étape de calcul d'au moins un mouvement relatif ((SL**), (SV**)) de la position d'alignement du premier nouveau jeu lames (12**, 13**) par rapport à la position d'alignement du jeu échantillon de lames (12*, 13*) ; et

(s5) l'étape d'instruction et d'exécution du positionnement de la première nouvelle lame à inciser (12**) du premier nouveau jeu de lames (12**, 13**).

2. Procédé selon la revendication 1, **caractérisé en ce que** les lames à inciser utilisées (12, 12*, 12**) comportent une dent de forme trapézoïdale isocèle.

3. Procédé selon la revendication 1, **caractérisé en ce que** les lames à inciser utilisées (12, 12*, 12**) comportent une dent droite.

4. Procédé selon la revendication 1, **caractérisé en ce que** les lames à inciser utilisées (12, 12*, 12**) comporte des lames fendues et une dent droite.

5. Procédé selon la revendication 2, **caractérisé en ce qu'**il comprend les étapes suivantes, même non nécessairement dans l'ordre fourni :

(s1) la mesure de l'épaisseur (LDI*) et de la distance (DST1*) de la dent de forme trapézoïdale avec des angles de base connus d'une lame à inciser échantillon (12*) par rapport audit premier plan de référence (RP1) en correspondance avec ledit second plan de référence (RP2) ;

(s2) la mesure de l'épaisseur (LDL*) et de la distance (DST2*) de la dent d'une lame de coupe échantillon (13*) par rapport à un plan de référence parallèle audit premier plan de référence (RP1), où ladite lame de coupe échantillon (13*) doit correspondre à ladite lame à inciser échantillon (12*) auparavant mesurée ; ladite lame à inciser échantillon (12*) et ladite lame de coupe échantillon (13*) constituant un jeu échantillon de lames (12*, 13*) ;

(s3) l'alignement manuel de ladite lame de coupe échantillon (13*) par rapport à la lame à inciser échantillon respective (12*) sur la machine de sorte que la coupe produite par ladite lame de coupe échantillon (13*) soit totalement contenue dans une incision précédente produite par ladite lame à inciser échantillon (12*) sur la surface inférieure d'un panneau (PNL1) ; ledit alignement manuel de jeu échantillon de lames (12*, 13*) devant être utilisé en tant que position de remise à zéro ou de référence pour les alignements suivants ;

(s4) le calcul de la distance (STC*) entre la position de mesure sur ledit second plan de référence (RP2) et la position d'incision sur la surface inférieure du panneau (PNL1) en correspondance avec un établi (15) ;

(s5) par rapport à la valeur positive ou négative de ladite distance (STC*), la détermination que la position d'incision de la dent de la lame à inciser échantillon (12*), en correspondance avec l'établi (15), est plus ou moins élevée par rapport à la position de mesure sur la dent de la même lame à inciser échantillon (12*) en correspondance avec ledit second plan de référence (RP2) ;

(s6) la mesure de l'épaisseur (LDI**) et de la distance (DST1**) de la dent d'une première nouvelle lame à inciser (12**) par rapport audit premier plan de référence (RP1) en correspondance avec ledit second plan de référence (RP2), ladite première nouvelle lame à inciser (12**) possédant des dents avec une forme géométrique similaire à celles de la lame à inciser échantillon (12*) ;

(s7) la mesure de l'épaisseur (LDL**) et de la distance (DST2**) de la dent d'une première nouvelle lame de coupe (13**) par rapport au plan de référence parallèle audit premier plan de référence (RP1), où ladite première nouvelle lame de coupe (13**) doit correspondre à ladite première nouvelle lame à inciser (12**) auparavant mesurée ; ladite première nouvelle lame à inciser (12**) et ladite première nouvelle lame de coupe (13**) constituant un premier nouveau jeu de lames (12**, 13**) ;

(s8) le calcul du mouvement latéral (SL**) de la première nouvelle lame à inciser (12**) par rapport à la position d'alignement de la lame à inciser échantillon (12*) afin de l'aligner latéralement avec la première nouvelle lame de coupe (13**) ;

(s9) le calcul de la largeur d'incision (SPI**) de la première nouvelle lame à inciser (12**) à faire correspondre à la première nouvelle lame de coupe (13**) ;

(s10) le calcul du mouvement vertical (SV**) de la première nouvelle lame à inciser (12**) par rapport à la position d'alignement de la lame à inciser échantillon (12*) afin de correspondre à la première nouvelle lame de coupe (13**) ; et

(s11) l'instruction et l'exécution du positionnement de la première nouvelle lame à inciser (12**) conformément aux calculs réalisés dans les étapes précédentes (s8), (s9), (S10) manuellement ou au moyen de dispositifs mobiles (DV1), (DV2).

6. Procédé selon la revendication 2 ou selon la revendication 5, **caractérisé en ce qu'**il comprend une étape supplémentaire :

(S12) l'exécution d'une mesure supplémentaire de la largeur de dent (LGH) d'une lame à inciser de forme trapézoïdale isocèle générique (12) à une distance incrémentale fixe (IQ) dudit plan de référence (RP2) pour déterminer de cette manière également l'angle latéral de dent de la lame à inciser générique (12).

7. Procédé selon la revendication 3 ou selon la revendication 4, **caractérisé en ce qu'**il comprend les étapes suivantes, même non nécessairement dans l'ordre fourni :

(s1) la mesure de l'épaisseur (LDI*) et de la distance (DST1*) d'une lame à inciser échantillon à forme de dent droite (12*) par rapport audit premier plan de référence (RP1) en correspondance avec ledit second plan de référence (RP2) ;

(s2) la mesure de l'épaisseur (LDL*) et de la distance (DST2*) de la dent d'une lame de coupe échantillon (13*) par rapport à un plan de référence parallèle audit premier plan de référence (RP1), où ladite lame de coupe échantillon (13*) doit correspondre à ladite lame à inciser échantillon (12*) auparavant mesurée ; ladite lame à inciser échantillon (12*) et ladite lame de coupe échantillon (13*) constituant un jeu échantillon de lames (12*, 13*) ;

(s3) l'alignement manuel de ladite lame de coupe échantillon (13*) par rapport à la lame à inciser échantillon respective (12*) sur la machine de sorte que la coupe produite par ladite lame de coupe échantillon (13*) soit totalement contenue dans une incision précédente produite par ladite lame à inciser échantillon (12*) sur la surface inférieure d'un panneau (PNL1) ; ledit alignement manuel du jeu échantillon de lames (12*, 13*) devant être utilisé en tant que position de remise à zéro ou de référence pour les alignements suivants ;

(s4) la mesure de l'épaisseur (LDI**) et de la distance (DST1**) de la dent d'une première nouvelle lame à inciser (12**) par rapport audit premier plan de référence (RP1) en correspondance avec ledit second plan de référence (RP2), ladite première nouvelle lame à inciser (12**) possédant des dents avec une forme géométrique similaire à celles de la lame à inciser échantillon (12*) ;

(s5) la mesure de l'épaisseur (LDL**) et de la distance (DST2**) de la dent d'une première nouvelle lame de coupe (13**) par rapport au plan de référence parallèle audit premier plan de référence (RP1), où ladite première nouvelle lame de coupe (13**) doit correspondre à ladite première nouvelle lame à inciser (12**) auparavant mesurée ; ladite première nouvelle lame à inciser (12**) et ladite première nouvelle lame de coupe (13**) constituant un premier nouveau jeu de lames (12**, 13**) ;

(s6) le calcul du mouvement latéral (SL**) de la première nouvelle lame à inciser (12**) par rapport à la position d'alignement de la lame à inciser échantillon (12*) afin de l'aligner latéralement avec la première nouvelle lame de coupe (13**) ;

(s7) l'instruction et l'exécution du positionnement de la première nouvelle lame à inciser (12**) conformément aux calculs réalisés dans l'étape suivante (s6), manuellement ou au moyen du dispositif mobile (DV1).

**8.** Procédé selon la revendication 4 ou selon la revendication 7, **caractérisé en ce qu'**il comprend une étape supplémentaire :

(s8) le réglage de l'épaisseur (LDI) d'une lame à inciser générique à lame fendue et à dent droite (12), manuellement ou au moyen d'un troisième dispositif mobile (DV3).

**9.** Procédé selon la revendication 8, **caractérisé en ce que** ladite étape supplémentaire (s8) pour régler l'épaisseur (LDI) comprend les sous-étapes suivantes, même non nécessairement dans l'ordre fourni :

(s8A) le calcul de la largeur d'incision (SPI\*\*) de la première nouvelle lame à inciser (12\*\*) par rapport à l'épaisseur mesurée (LDL\*\*) de la première nouvelle lame de coupe (13\*\*) ;
(s8B) l'instruction et l'exécution du positionnement pour mesurer l'épaisseur de la lame à inciser (LDI\*\*) de la première nouvelle lame à inciser (12\*\*) devant être effectué extérieurement ou directement sur la machine, manuellement ou au moyen dudit dispositif mobile (DV3), en utilisant la valeur de la largeur d'incision calculée auparavant (SPI\*\*) ; et
(s8C) l'utilisation des données de la première nouvelle lame à inciser réglée (12\*\*) pour calculer le mouvement de réglage latéral (SL\*\*) de la première nouvelle lame à inciser (12\*\*) elle-même par rapport à la première nouvelle lame de coupe pertinente (13\*\*).

**10.** Procédé selon une quelconque des revendications précédentes, **caractérisé en ce qu'**un nouveau jeu générique de lames (12, 13) comprend une lame devant être remplacée et une lame déjà installée sur la machine.

**11.** Procédé selon une quelconque des revendications précédentes, **caractérisé en ce que**, en adoptant une seconde nouvelle lame à inciser (12\*\*\*), et une seconde nouvelle lame de coupe (13\*\*\*), la position d'alignement dudit jeu échantillon de lames (12\*, 13\*) ou la position d'alignement dudit premier nouveau jeu de lames (12\*\*, 13\*\*) est prise en tant que référence.

**12.** Appareil pour l'alignement de lames de scie (12, 13) d'une unité de coupe (10) d'une machine de coupe (1) de panneaux (PNL) et en particulier pour l'alignement correct entre une lame de coupe (13) et sa lame à inciser pertinente (12) ; l'appareil comprenant une unité de commande électronique (CC) et un dispositif de détection et de mesure (SS) ; l'appareil étant **caractérisé par le fait que** l'unité de commande électronique (CC) est programmée de manière telle à implémenter le procédé d'alignement de fonctionnement selon une quelconque des revendications précédentes 1 à 11.

**13.** Appareil selon la revendication 12, **caractérisé en ce qu'**il est totalement intégré dans la machine de coupe de panneau (1).

**14.** Appareil selon la revendication 12, **caractérisé en ce qu'**il est complètement externe à la machine de coupe de panneau (1).

**15.** Appareil selon la revendication 12, **caractérisé en ce que** ladite unité de commande électronique (CC) est intégrée dans la commande numérique de la machine de coupe de panneau (1), alors que ledit dispositif de détection et de mesure (SS) est externe à la machine de coupe de panneau (1) elle-même.

**16.** Appareil selon la revendication 14 ou dans la revendication 15, **caractérisé en ce que** l'unité de commande électronique (CC) est programmée de manière telle qu'elle soit capable de générer des données qui sont transférées manuellement ou par moyens électroniques à ladite machine de coupe de panneau (1).

**17.** Appareil selon une quelconque des revendications 14 à 16, **caractérisé en ce que** l'unité de commande électronique (CC) est programmée de manière telle qu'elle soit capable de servir pour l'alignement de lame de scie de deux, ou plus, machines de coupe de panneaux.

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19520108 B4, SCHELLING
- EP 1066906 B1, BIESSE

- DE 20005348 U1, PANHANS
- EP 1815931 A1, MARTIN